(19) Europäisches Patentamt
European Patent Office
Office européen des brevets

(11) **EP 2 793 173 A1**

(12) **EUROPEAN PATENT APPLICATION**
published in accordance with Art. 153(4) EPC

(43) Date of publication:
**22.10.2014 Bulletin 2014/43**

(21) Application number: **12857569.3**

(22) Date of filing: **13.12.2012**

(51) Int Cl.:
*G06K 19/07* (2006.01)    *H04B 1/59* (2006.01)
*H04B 5/02* (2006.01)    *H04M 1/00* (2006.01)

(86) International application number:
**PCT/JP2012/082400**

(87) International publication number:
**WO 2013/089195 (20.06.2013 Gazette 2013/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2011 JP 2011273867**

(71) Applicant: **NEC CASIO Mobile Communications, Ltd.**
**Kawasaki-shi, Kanagawa 211-8666 (JP)**

(72) Inventor: **SATO, Resshi**
**Kanagawa 2118666 (JP)**

(74) Representative: **Vossius & Partner**
**Siebertstrasse 4**
**81675 München (DE)**

(54) **MOBILE TERMINAL APPARATUS AND METHOD FOR ADJUSTING RFID ANTENNA RESONANCE FREQUENCY THEREOF**

(57)    The present invention is designed to avoid an occurrence of a situation in which a resonance frequency of an RFID antenna, optimized at manufacture, is varied to render RFID communication impossible under the influence of extension function installed by option. A portable terminal apparatus equipped with an RFID function, includes a storage unit (407) storing in advance correspondence between an apparatus configuration in which the portable terminal apparatus has a predetermined preset extension function allowed to be added thereto, and a correction value of a resonance frequency of an RFID antenna, a detection unit (407) detecting which extension function is installed on the portable terminal apparatus, and a control unit (404) obtaining a correction value of the resonance frequency of the RFID antenna, corresponding to an apparatus configuration including the extension function, from the storage unit and correcting the resonance frequency of the RFID antenna, based on the correction value.

FIG. 1

EP 2 793 173 A1

**Description**

TECHNICAL FIELD

(Reference to Related Application)

This application is based upon and claims the benefit of the priority of Japanese Patent Application No. 2011-273867 filed on December 14, 2011, the disclosure of which is incorporated herein in its entirety by reference thereto.

This invention relates to a portable communication terminal apparatus. More particularly, it relates to a portable terminal apparatus having an RFID (Radio Frequency Identification) function and a technology of adjusting a resonance frequency of an RFID antenna

BACKGROUND

As a portable terminal apparatus including RFID function (an RFID antenna and an IC (Integrated Circuit) chip), has been used for payment service by wireless communication with an RFID reader or the like. There is also known a portable terminal apparatus including an RFID reader and configured to read information of an RFID tag to perform data transmission to a mobile network, data management and so forth.

Such a portable terminal apparatus, provided with an optional function allowed to be arbitrarily selected by a user (subscriber) using the portable terminal apparatus, is also utilized, wherein the optional function is a function that can be arbitrarily selected by the user by addition, exchange, or the like, such as a non-contact charging function, for example, and that is referred to herein as an 'extension function' because it extends a basic function.

A condition under which interference occurs between an RFID antenna of a portable terminal apparatus equipped with an RFID function, and an extension function installed on the portable terminal apparatus, differ according to installation places of the RFID antenna and the extension function and positional relationship therebetween. In a case that a component of the extension function (such as an electrical conductive member, e.g., a board), is provided in a vicinity of the RFID antenna, an installation condition (matching condition) of the RFID antenna is caused to be changed by an influence of the electrical conductive member. A resonance frequency of the RFID antenna, optimized when the portable terminal apparatus is manufactured, may vary under an influence of a component of the extension function (electrical conductive member) after product shipment, thus disabling communication between the apparatus and an RFID tag or the like. It is noted however that interference does not always occur between an RFID antenna and the extension function.

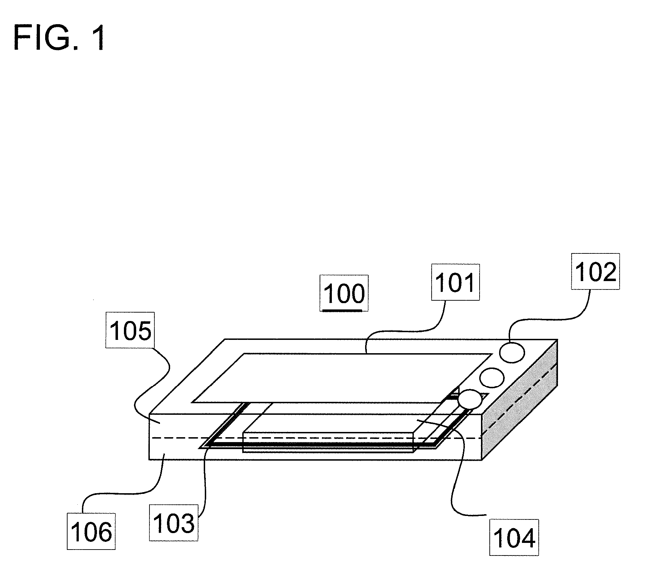

Several examples of portable terminal apparatus equipped with an RFID function, will now be briefly described. A portable terminal apparatus 100, schematically illustrated in Fig.1, includes a chassis top case and a chassis bottom case 106. A display 101 and a number of keys 102 are provided on an outer surface of the chassis top case 105. An RFID antenna 103 is arranged around a battery (a standard secondary battery) 104.

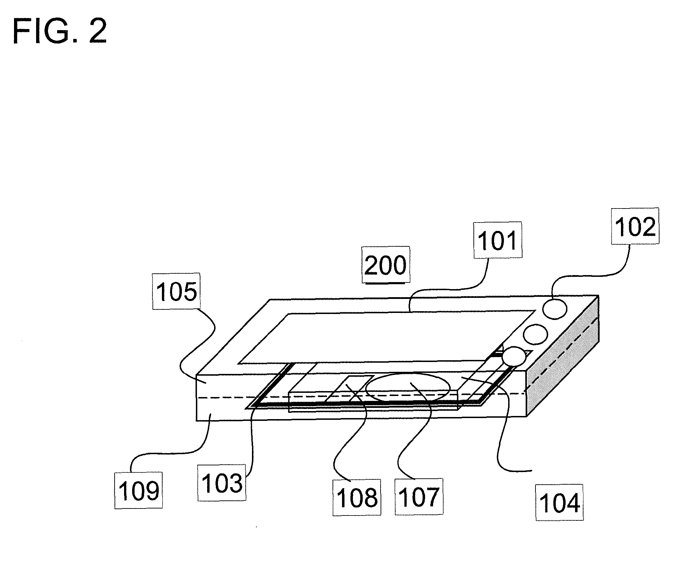

A portable terminal apparatus 200, schematically illustrated in Fig.2, includes a non-contact charging function (also referred to as a contactless charging function), as an extension function. Referring to Fig.2, in this portable terminal apparatus 200, the chassis bottom case 106 of Fig.1 is exchanged with a chassis bottom case 109 that includes a non-contact charging circuit (made up of a coil 107 and a charging circuit 108) and provides a non-contact charging function. In a case that a current (alternating current) is caused to flow through a primary coil provided on a non-contact charging unit side, not shown, an electromotive force is induced by electromagnetic induction to generate an alternating current in the coil 107 (secondary coil). The so generated current is converted by the charging circuit 108 to a direct current to charge a battery 104 (secondary battery).

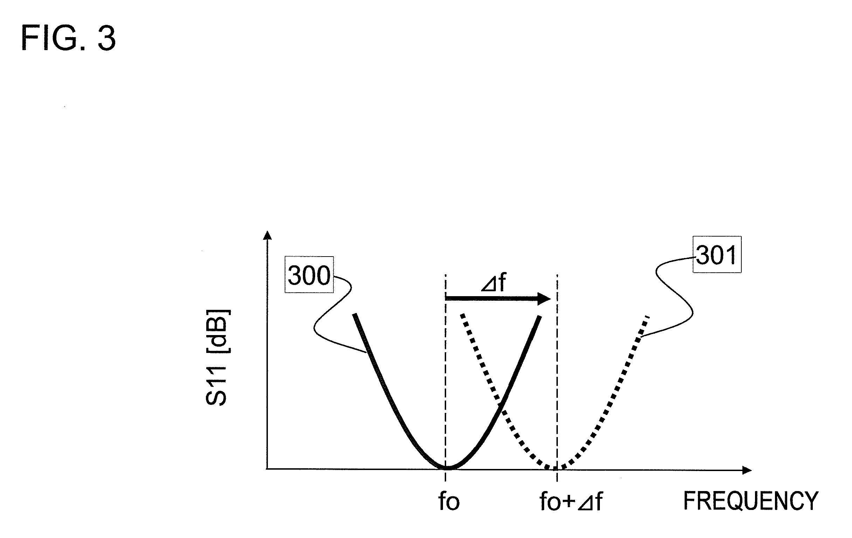

Referring to Fig.2, the non-contact charging circuit (coil 107 and circuit 108) appears to the RFID antenna 103 to be an electrically conductive member and acts for decreasing an inductance of the RFID antenna 103. Hence, a resonance frequency f0 of the RFID antenna 103 that has been optimized at manufacture, shifts to an upper side (higher frequency side), or to a value of f0 + $\Delta$f, where $\Delta$f > 0, as shown in Fig.3. In Fig.3, 300 denotes a reflection characteristic (S-parameter S11 in decibel dB representation) of the RFID antenna 103 when a non-contact charging circuit is not provided, that is equal to 1 (0 in decibel dB representation) at the resonance frequency. 301 denotes a reflection characteristic (S parameter S11) of the RFID antenna 103 when a non-contact charging circuit is added. When the resonance frequency of the RFID antenna 103 is varied in this manner under an influence of the non-contact charging circuit, a RFID communication characteristic is deteriorated to give rise to a communication disabled region (frequency region in a RFID communication bandwidth).

The value of shift $\Delta$f (frequency variation) of the resonance frequency f of the RFID antenna depends on a position relationship between the RFID antenna 103 and the non-contact charging circuit (coil 107 and circuit 108). It may thus be contemplated that, in order to suppress an occurrence of a frequency variation of a resonance frequency of the RFID antenna 103, the non-contact charging circuit (coil 107 and circuit 108) may be so arranged apart by a certain interval from the RFID antenna 103,. However, such a configuration is difficult to implement in consideration of constraints of designing and implementation condition of the portable terminal apparatus for which reduction in size and thin thickness are required.

In Patent Literature 1, there is disclosed a configuration in which, in order to adjust variation in a resonance frequency of a non-contact IC chip at manufacture to cause the resonance frequency to be in proper bandwidth, switching of connection of a plurality of capacitors is made so that a resonance frequency of a capacitance and a coil is in a predetermined range.

Patent Literature 1 discloses adjustment of the resonance frequency f0 of an RFID antenna, at manufacture of the portable terminal apparatus. However, in Patent Literature 1, there is not disclosed such a configuration that compensates for frequency variations Δf of the resonance frequency of the RFID antenna ascribable to an extension function that is optionally selected by a user and installed on a portable terminal apparatus.

CITATION LIST

PATENT LITERATURE

[PTL 1]
Japanese Patent Kokai Publication No. JP2010-147743A

SUMMARY OF THE INVENTION

PROBLEMS TO BE SOLVED BY THE INVENTION

The following gives an analysis of the related technologies.

In a portable terminal apparatus equipped with an RFID function, under an influence of an extension function optionally selected by a user and installed on the portable terminal apparatus, a resonance frequency of an RFID antenna, optimized such as at a time of manufacture of the portable terminal apparatus, may vary, thus causing RFID communication to be disabled.

Accordingly, the present invention has been made in order to the above mentioned inconvenience. It is an object of the present invention to provide a portable terminal apparatus equipped with an RFID function, that may enable to prevent occurrence of such a situation in which a resonance frequency of an RFID antenna optimized at manufacture is subject to variation under an influence of extension function installed by option or the like and RFID communication is caused to be disabled. There are also provided a corresponding method and a corresponding program.

MEANS TO SOLVE THE PROBLEMS

In one of aspects of the present invention, there is provided a portable terminal apparatus equipped with an RFID (Radio Frequency Identification) function, the portable terminal apparatus comprising: a storage unit storing in advance correspondence between an apparatus configuration for a case where the portable terminal apparatus has a predetermined preset extension function allowed to be added thereto, and a correction value of a resonance frequency of an RFID antenna; a detection unit configured to detect which extension function is installed on the portable terminal apparatus; and a control unit configured to receive information on the extension function installed on the portable terminal apparatus, detected by the detection unit, to obtain a correction value of the resonance frequency of the RFID antenna, corresponding to an apparatus configuration including the extension function, by referring to the storage unit, and to correct the resonance frequency of the RFID antenna, based on the correction value.

In another aspect of the present invention, there is provided a method for adjusting a resonance frequency of an RFID antenna of a portable terminal apparatus, the method comprising:

storing in advance correspondence between an apparatus configuration for a case where the portable terminal apparatus has a predetermined preset extension function allowed to be added thereto, and a correction value of a resonance frequency of the RFID antenna;
detecting which extension function is installed on the portable terminal apparatus; and
obtaining a correction value of the resonance frequency of the RFID antenna corresponding to the apparatus configuration having the extension function installed on the portable terminal apparatus, from the storage unit; and
correcting the resonance frequency of the RFID antenna, based on the correction value.

In still another aspect of the present invention, there is provided a program that causes a portable terminal apparatus equipped with an RFID (Radio Frequency Identification) function, the portable terminal apparatus comprising

a storage unit storing correspondence between an apparatus configuration for a case where the portable terminal apparatus has a predetermined preset extension function allowed to be added thereto, and a correction value of a resonance frequency of an RFID antenna, to execute the processing comprising

a detection processing that detects which extension function is installed on the portable terminal apparatus; and

a control processing that performs control to obtain a correction value of the resonance frequency of the RFID antenna corresponding to the apparatus configuration having the extension function installed on the portable terminal apparatus, from the storage unit, and to correct the resonance frequency of the RFID antenna, based on the correction value.

EFFECT OF THE INVENTION

According to the present invention, it is possible to avoid such a situation in which, under the influences of the extension functions installed such as by option, the resonance frequency of the RFID antenna optimized at manufacture is varied to render RFID communication infeasible.

BRIEF DESCRIPTION OF THE DRAWINGS

Fig.1 is a perspective view schematically illustrating an example arrangement of a portable terminal apparatus equipped with an RFID function.
Fig.2 is a perspective view schematically illustrating another example arrangement of a portable terminal apparatus equipped with an RFID function.
Fig.3 is a diagram for describing shift of a resonance frequency of an RFID antenna.
Fig.4 is a block diagram illustrating an arrangement of an exemplary embodiment of the present invention.
Fig.5 is a diagram illustrating an example of a circuit arrangement of an RFID unit of the exemplary embodiment of the present invention.
Fig.6 is a perspective view schematically illustrating an arrangement (a large capacity battery being installed) of an exemplary embodiment of the present invention.
Fig.7 is a diagram illustrating content (information) stored in a storage unit of the exemplary embodiment of the present invention.
Fig.8 is a flowchart for describing processing of the exemplary embodiment of the present invention.

PREFERRED MODE FOR CARRYING OUT THE INVENTION

The following describes the principle of the present invention. Referring to Fig.2, as an example, in a portable terminal apparatus product (portable communication apparatus), a positional relationship between an RFID antenna 103 and a non-contact charging circuit (coil 107 and circuit 108) is constant. In this case, degree or extent of an influence of the non-contact charging circuit on a resonance frequency of the RFID antenna 103 is also constant. Hence, if it is possible to identify, in a product of a portable terminal apparatus 200 equipped with an RFID function, what is an extension function that is added to the portable terminal apparatus after shipment thereof, as an option, by user selection, a value of variation in the resonance frequency of the RFID antenna caused by such addition of the extension function may also be known.

According to the present invention, in adjusting an RFID antenna in the portable terminal apparatus installed with an RFID function, and in which a function extension module may be added by adding or exchanging an exterior case, detection of an extension function actually mounted (used) and selection of a resonance frequency adjustment value for the RFID antenna matched to a use mode are performed.

That is, according to the present invention, an implementation mode (use mode) in which an extension function is added by option after manufacture is identified and a compensation of the resonance frequency to a frequency variation amount matched to the implementation mode (use mode). This renders it possible to prevent an occurrence of a situation in which the resonance frequency of the RFID antenna is varied as a result of a function extension to cause the RFID communication to be disabled.

<Exemplary Embodiments>

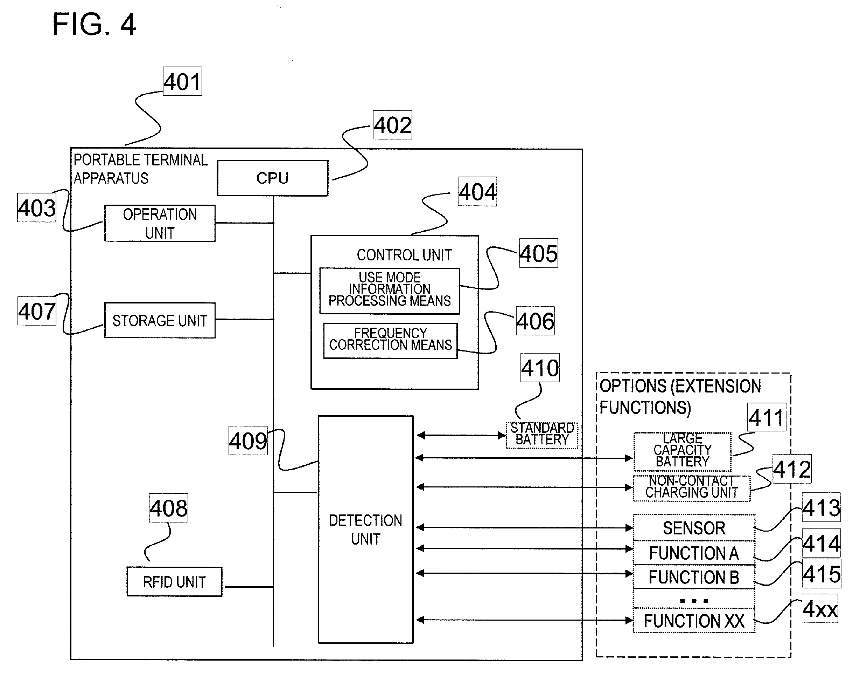

The following describes exemplary embodiments of the present invention. Fig.4 is a schematic block diagram illustrating an example of an arrangement of a portable terminal apparatus of a first exemplary embodiment of the present invention. Referring to Fig.4, a portable terminal apparatus 401 includes a CPU (Central Processing Unit) 402, an operation unit 403, a control unit 404, a storage unit 407, an RFID unit 408, a detection unit 409 and a standard battery 410.

The CPU 402 is a processor that controls entirety of the portable terminal apparatus 401, and operates to execute a program stored in the storage unit 407 to carry out a variety of processing operations via the control unit 404.

The detection unit 409 detects which extended function the portable terminal apparatus 401 currently has among functions including the standard battery 410 and options (extended functions) of a large capacity battery 411, a non-contact charging unit 412, a sensor 413 and so forth (others such as, a function A (414), a function B

(415), a function xx (4xx)) (the detection unit 409 may detect an ID of an extension function module connected to an IO bus, not shown, or get a notification from the extension function module). The detection unit 409 then notifies the control unit 404 as to a current combination of the functions.

The operation unit 403 receives an input from the user and notifies the CPU 402 of the corresponding operation information. The operation unit 403 receives a notice from the CPU 402 to output information to a display, not shown.

The control unit 404 includes a use mode information processing means 405 that manages and processes a use mode, such as which extension function is currently being used in the portable terminal apparatus 401 and a frequency correction means 406 that corrects the resonance frequency of the RFID antenna of the RFID unit 408 depending on an extension function currently used.

The storage unit 407 stores each correction value of the resonance frequency of the RFID antenna corresponding to a configuration of the portable terminal apparatus provided with each extension function. It is noted that the correction value of the resonance frequency of the RFID antenna corresponding to the configuration of the apparatus provided with each extension function based on measurement and adjustment result performed in advance of product shipment, is recorded in a non-volatile memory, such as a ROM (Read Only Memory) or an EEPROM (Electrically Erasable and Programmable ROM). The storage unit 407 may, as a matter of course, include a volatile memory, such as a RAM (Random Access Memory), storing work data, in addition to the non-volatile memories.

The RFID unit 408 performs transmission and reception data to and from an external reader/writer apparatus, not shown, by con-contact IC card communication, which is one of near-distance wireless communications.

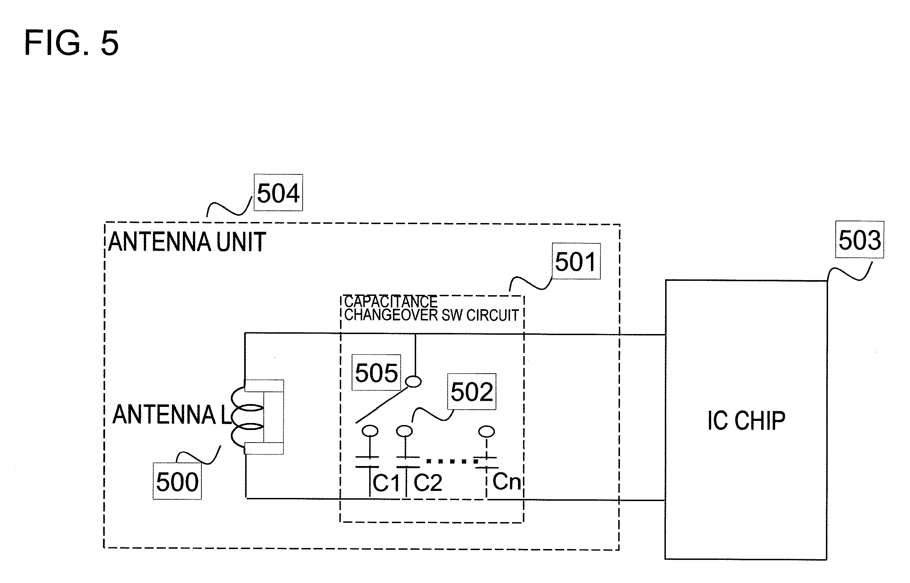

Fig.5 is a diagram illustrating an example of a circuit arrangement of the RFID unit 408. Referring to Fig.5, the RFID unit 408 includes an antenna unit 504 that transmits and receives electromagnetic waves, and an IC chip 503. The antenna unit 504 and the IC chip 503 make up a so-called non-contact IC card. The IC chip 503 includes a control unit (CPU) and a memory, not shown, to perform control of transmission and reception of RFID communication packets.

The antenna unit 504 includes a loop type antenna 500 (antenna pattern: coil), making up an RFID antenna, and a capacitance value changeover switch circuit 501. The capacitance value changeover switch circuit 501 includes a plurality of capacitors (C1 to Cn) 502 and a switch 505. The antenna unit 504 forms a parallel resonance circuit composed by an inductance (L) of the antenna 500 and a capacitance (C) of the capacitor 502. The resonance frequency f of the RFID antenna may be given by the following equation (1):

$$ f = 1 / \{ 2\pi\sqrt{(LC)} \} \qquad\qquad \ldots(1) $$

where

  L: antenna inductance
  C: capacitance value of tuning capacitors C1 to Cn.

Fine adjustment of the capacitance value (C), dependent on a type of an extension function installed on the portable terminal apparatus, is performed by switching of the capacitors 502 by the switch 505 of the capacitance value changeover switch circuit 501 so that a desired capacitance value C is obtained. In Fig.5, only one switch 505 is schematically illustrated. It is also possible to connect switches respectively to the capacitors 502, so as to enable selecting a plurality of capacitors each connected in parallel with the inductance (L) of the antenna 500 (Note that, in the case wherein the n capacitors are respectively provided with n switches, the number of different capacitance values that may actually be assumed is equal to the number of different combinations of on/off states of the n switches, that is, an nth power of 2).

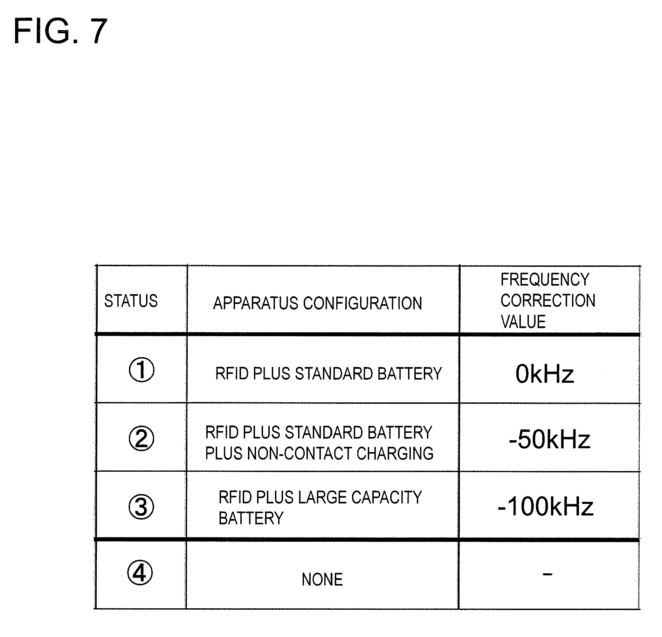

In the case wherein in the above equation (1), the frequency variation of $\Delta f(\Delta f > 0)$ with respect to the resonance frequency f0 (a value of the capacitance adjusted is assumed to be equal to C0) of the RFID antenna, optimized at manufacture is produced under an influence of an electrically conductive member (conductor) of the extension function, one of the capacitors 502 having a capacitance value corresponding to C0 + $\Delta$C is selected in order to correct the frequency variation. It is noted that information on the capacitance value C0 of the capacitor, a capacitance value adjusted at manufacture of the portable terminal apparatus 401 (see Fig.4), may be stored in a non-volatile memory of the non-volatile storage unit of the portable terminal apparatus 401 (see Patent Literature 1), and at power up of the portable terminal apparatus 401 after production shipment (see Fig.4), the capacitor 502 may be selected by a switch so that the capacitance value (C0) at manufacture may be corrected by the capacitance correction value ΔC depending on a type of the extension function installed on the portable terminal apparatus, according to an instruction of the frequency correction means 406 of the control unit 404. In this case, the frequency correction means 406 of the control unit 404, from the correction value of the resonance frequency of the RFID antenna (see Fig.7), selects the switch 505 so that a resulting capacitance value will become a value corresponding to a corrected resonance frequency of the RFID antenna.

A portable terminal apparatus, capable of extension to a non-contact charging function, and a portable terminal apparatus, capable of extension to a large capacity battery, will now be described by way of examples. As for apparatus configurations, the following configurations will be described as examples.

(1) RFID plus a standard battery (see Fig.1)

(2) RFID plus a standard battery plus a non-contact charging circuit (see Fig.2)

Referring to Fig.2, in the case wherein a non-contact charging circuit (coil 107 and circuit 108) is arranged inside of the RFID antenna 103, the resonance frequency of the RFID antenna shifts upward by +50 kHz, for example, as mentioned above.

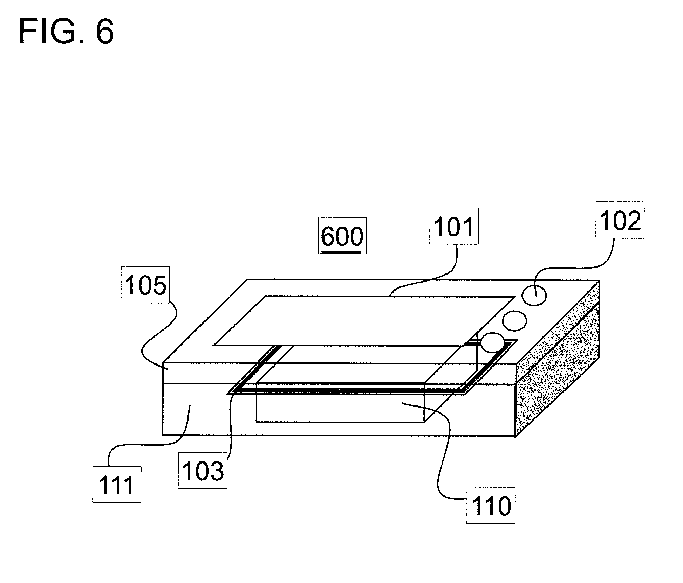

(3) RFID plus a large capacity battery (see Fig.6)

Fig.6 is a diagram illustrating a configuration of an RFID plus a large capacity battery. A portable terminal apparatus 600 includes a large capacity battery 110 and a chassis bottom case 111 for a large capacity battery.

In the configuration of the non-contact charging function (2), a metal (conductor) is used only partially. In the configuration of the large capacity battery (3), an entire surface is a conductive member, and the resonance frequency of the RFID antenna is shifted towards a higher frequency side (by +100kHz).

It is thus seen that how much the resonance frequency of the RFID antenna is shifted for which of the extension functions installed on the portable terminal apparatus is known from the outset at the manufacturer of the portable terminal apparatus, as an example. Hence, the value of frequency correction (offset) of the resonance frequency of the RFID antenna is selected in dependence upon the particular extension function. Fig.7 shows values for frequency correction for apparatus configurations (1) through to (3).

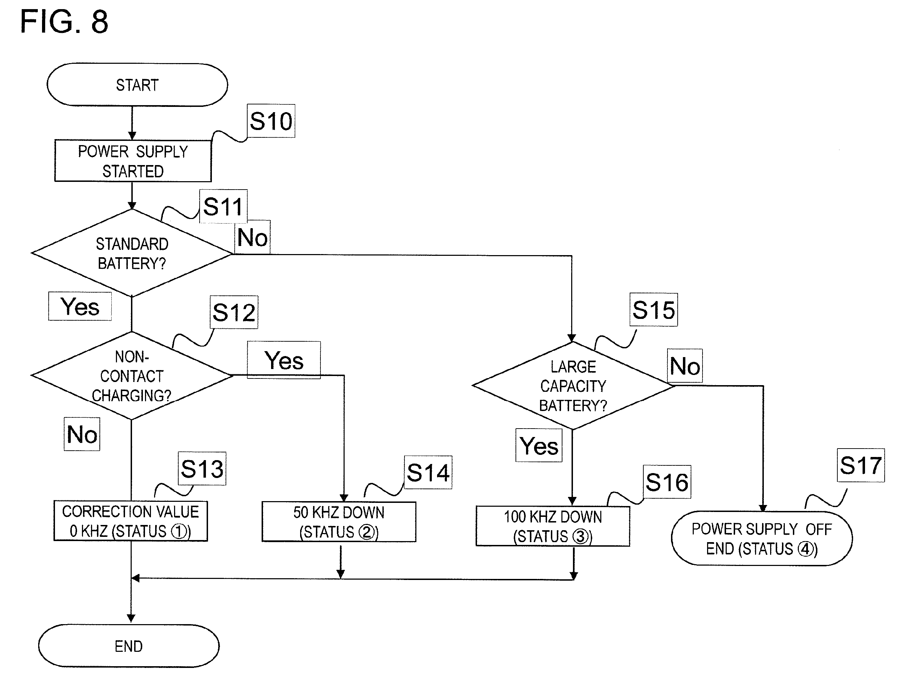

Fig.8 is a flowchart illustrating an example of a method for adjusting a resonance frequency of an RFID antenna corresponding to a use mode of the portable terminal apparatus.

<Step S10>

When a power supply is started, the operation unit 403 proceeds the processing to a step S11.

<Step S11>

The detection unit 409 decides whether or not a installed battery is the standard battery 410, and notifies the decision result to the control unit 404. Or, by issuing a command from the control unit 404 to the detection unit 409, the control unit 404 obtains status information (information that a battery installed is the standard battery 410). If the battery installed is the standard battery 410, the processing proceeds to a step S12 under control of the control unit 404.

<Step S12>

The detection unit 409 decides whether or not there is provided a non-contact charging function. If there is no non-contact charging function, the detection unit 409 notifies information that there is no non-contact charging function to the control unit 404. Or, by issuing a command from the control unit 404 to the detection unit 409, the control unit 404 obtains status information (information that there is no non-contact charging function). In this case, the control unit 404 decides that a current status is the status (1), from a processing result by the use mode information processing means 405 of the control unit 404, and proceeds the processing to a step S13.

<Step S13>

The frequency correction means 406 of the control unit 404 decides that a frequency adjustment value is not to be changed, and accordingly completes the processing.

If it is decided in the step S12 that there is a non-contact charging function, the detection unit 409 notifies information that there is the non-contact charging function to the control unit 404. Or, by issuing a command from the control unit 404 to the detection unit 409, the control unit 404 obtains status information (information that there is a non-contact charging function). Based on the information that there is a non-contact charging function, the use mode information processing means 405 of the control unit 404 decides that a current status is the status (2), and accordingly proceeds to a step S14.

<Step S14>

Based on a frequency adjustment value (-50 kHz), registered in advance in the storage unit 407, the frequency correction means 406 of the storage unit 404 performs correction processing of the resonance frequency of the RFID antenna in the RFID unit 408 and completes the processing.
In the step S11, if the battery installed is not the standard battery, the processing proceeds to a step S15 under control by the control unit 404.

<Step S15>

The detection unit 409 decides whether or not there is a large capacity battery. If there is the large capacity battery, the detection unit 409 notifies information that there is the large capacity battery to the control unit 404. Or, by issuing a command from the control unit 404 to the detection unit 409, the control unit 404 obtains status information (information that there is the large capacity battery). The use mode information processing means 405 of the control unit 404 decides that a current status is the status (3). The processing proceeds to a step S16.

<Step S16>

Based on a value for frequency adjustment (-100kHz), registered in advance in the storage unit 407, the frequency correction means 406 of the control unit 404 performs correction processing of the resonance frequency of the RFID antenna of the RFID unit 408 and completes the processing.
If it is decided in the step S15 that there is no large capacity battery, information that there is no large capacity battery is notified to the control unit 404. Or, by issuing a command from the control unit 404 to the detection unit 409, the control unit 404 obtains status information (information that there is no large capacity battery). In this case, since the status is abnormal, the control unit 404 proceeds the processing to a step S17.

<Step S17>

The control unit 404 causes a power supply of the portable terminal apparatus to be automatically turned off (initiates an automatic shutdown process).
It is noted that part or all of the functions and processing of the control unit 404 and the detection unit 409, performed in the respective steps of Fig.8, may be implemented by a program (control program) executed on a computer.
According to the exemplary embodiment, by performing correction of a resonance frequency of the RFID antenna corresponding to use mode of extension function(s) optionally selected by a user, a signal transmission can be carried out contact-free without impairing an RFID antenna characteristic. In the exemplary embodiment, an example wherein an RFID antenna is arranged around a battery is described. Alternatively, the RFID antenna may be arranged within an inside of the portable terminal apparatus, such as within an inside of the battery pack.
The present invention may apply to portable terminal apparatuses, such as, for example, a portable handset, a smartphone, a tablet or a personal computer (PC) having a non-contact IC card built-in.
The particular exemplary embodiments or examples may be modified or adjusted within the gamut of the entire disclosure of the present invention, inclusive of claims, based on the fundamental technical concept of the invention. Moreover, a variety of combinations or selection of elements herein disclosed (elements of claims Examples and drawings) may be made within the concept of the claims of the present invention. Viz., it is to be understood that the present invention may include a variety of changes or corrections that may occur to those skilled in the art in accordance with the total disclosures inclusive of the claims as well as the technical concept of the invention.

EXPLANATIONS OF SYMBOLS

100, 200, 401, 600    portable terminal apparatus

| 101 | display |
| 102 | keys |
| 103 | RFID antenna |
| 104 | battery |
| 105 | casing member forming an upper chassis surface |
| 106 | another casing member forming a lower chassis surface |
| 107 | non-contact charging coil |
| 108 | non-contact charging circuit |
| 109 | casing member forming a lower chassis surface with non-contact charging function |
| 110 | large capacity battery |
| 111 | casing member forming a lower chassis surface for large capacity battery |
| 300 | reflection characteristic (reflection coefficient S11 in the absence of non-contact charging circuit) |
| 301 | reflection characteristic (reflection coefficient S11 in the presence of non-contact charging circuit) |
| 402 | CPU |
| 403 | operation unit |
| 404 | control unit |
| 405 | use mode information processing means |
| 406 | frequency correction means |
| 407 | storage unit |
| 408 | RFID unit |
| 409 | detection unit |
| 410 | standard battery |
| 411 | large capacity battery |
| 412 | non-contact charging unit |
| 413 | sensor |
| 414, 415, 4xx | functions A, B, xx |
| 500 | antenna (looped antenna pattern) |
| 501 | capacitance value changeover switch circuit |
| 502 | capacitors |
| 503 | IC chip |
| 504 | antenna unit |
| 505 | switch |

## Claims

1. A portable terminal apparatus equipped with an RFID (Radio Frequency Identification) function, the portable terminal apparatus comprising:

   a storage unit storing in advance correspondence between an apparatus configuration for a case where the portable terminal apparatus has a predetermined preset extension function allowed to be added thereto, and a correction value of a resonance frequency of an RFID antenna;
   a detection unit configured to detect which extension function is installed on the portable terminal apparatus; and
   a control unit configured to receive information on the extension function installed on the portable terminal apparatus, detected by the detection unit, to obtain a correction value of the resonance frequency of the RFID antenna, corresponding to an apparatus configuration including the extension function, by referring to the storage unit, and to correct the resonance frequency of the RFID antenna, based on the correction value.

2. The portable terminal apparatus according to claim 1, wherein the apparatus configuration includes, in addition to the RFID function plus a standard battery, at least one of:

   the RFID function plus a standard battery plus a non-contact charging function; and
   the RFID function plus a large capacity battery larger in capacity than the standard battery,
   the storage unit storing a correction value of the resonance frequency of the RFID antenna, in association with each apparatus configuration.

3. The portable terminal apparatus according to claim 2, wherein the detection unit decides, when power is up, whether or not a standard battery is installed,

in a case wherein the standard battery is installed, the detection unit deciding whether or not a non-contact charging function is provided as the extension function,

in a case wherein the non-contact charging function is not provided, the control unit performing no correction of the resonance frequency of the RFID antenna, while in a case wherein the non-contact charging function is provided, the control unit obtaining, from the storage unit, a correction value of the resonance frequency of the RFID antenna corresponding to the apparatus configuration in which the non-contact charging function is provided, to correct the resonance frequency of the RFID antenna with the correction value obtained,

in a case wherein the standard battery is not installed, the detection unit deciding whether or not a large capacity battery is provided as the extension function, and

in a case wherein the large capacity battery is provided, the control unit obtaining, from the storage unit, a correction value of the resonance frequency of the RFID antenna corresponding to the apparatus configuration in which the large capacity battery is provided, to correct the resonance frequency of the RFID antenna with the correction value obtained, whereas in a case wherein the large capacity battery is not provided, the control unit causing a power supply to be turned off.

4. The portable terminal apparatus according to any one of claims 1 to 3, wherein the control unit selects, a capacitor from among a plurality of capacitors, constituting an LC resonance circuit in conjunction with a coil of the RFID antenna, based on the correction value, to adjust the resonance frequency of the RFID antenna.

5. A method for adjusting a resonance frequency of an RFID antenna of a portable terminal apparatus, the method comprising:

storing in advance correspondence between an apparatus configuration for a case where the portable terminal apparatus has a predetermined preset extension function allowed to be added thereto, and a correction value of a resonance frequency of the RFID antenna;

detecting which extension function is installed on the portable terminal apparatus; and

obtaining a correction value of the resonance frequency of the RFID antenna corresponding to the apparatus configuration having the extension function installed on the portable terminal apparatus, from the storage unit; and

correcting the resonance frequency of the RFID antenna, based on the correction value.

6. The method for adjusting the resonance frequency of the RFID antenna of a portable terminal apparatus according to claim 5, wherein the apparatus configuration includes, in addition to the RFID function plus a standard battery, at least one of:

the RFID function plus a standard battery plus a non-contact charging function; and

the RFID function plus a large capacity battery larger in capacity than the standard battery,

the storage unit storing the correction value of the resonance frequency of the RFID antenna in association with each apparatus configuration.

7. The method for adjusting a resonance frequency of an RFID antenna of a portable terminal apparatus according to claim 6, comprising:

a detection unit of the portable terminal apparatus deciding, when power is up, whether or not a standard battery is installed;

in a case wherein the standard battery is installed, the detection unit deciding whether or not a non-contact charging function is provided as the extension function,

in a case wherein the non-contact charging function is not provided, performing no correction of the resonance frequency of the RFID antenna, while in a case wherein the non-contact charging function is provided, obtaining, from the storage unit, a correction value of the resonance frequency of the RFID antenna corresponding to the apparatus configuration in which the non-contact charging function is provided, to correct the resonance frequency of the RFID antenna with the correction value obtained,

in a case wherein the standard battery is not installed, the detection unit deciding whether or not a large capacity battery is provided as the extension function, and

in a case wherein the large capacity battery is provided, the control unit obtaining, from the storage unit, a correction value of the resonance frequency of the RFID antenna corresponding to the apparatus configuration in which the large capacity battery is provided, to correct the resonance frequency of the RFID antenna with the correction value obtained, whereas in a case wherein the large capacity battery is not provided, the control unit causing a power supply of the portable terminal apparatus to be turned off.

8. The method for adjusting a resonance frequency of an RFID antenna of a portable terminal apparatus according to any one of claims 5 to 7, comprising
selecting a capacitor from among a plurality of capacitors, constituting an LC resonance circuit in conjunction with a coil of the RFID antenna, based on the correction value, to adjust the resonance frequency of the RFID antenna.

9. A program that causes a portable terminal apparatus equipped with an RFID (Radio Frequency Identification) function, the portable terminal apparatus comprising a storage unit storing in advance correspondence between an apparatus configuration for a case where the portable terminal apparatus has a predetermined preset extension function allowed to be added thereto, and a correction value of a resonance frequency of an RFID antenna, to execute the processing comprising:

a detection processing that detects which extension function is installed on the portable terminal apparatus; and
a control processing that performs control to obtain a correction value of the resonance frequency of the RFID antenna corresponding to the apparatus configuration having the extension function installed on the portable terminal apparatus, from the storage unit, and to correct the resonance frequency of the RFID antenna, based on the correction value.

10. The program according to claim 9, wherein the detection processing decides, when power is up, whether or not a standard battery is installed,
in a case wherein the standard battery is installed, the detection processing deciding whether or not a non-contact charging function is provided as the extension function,
in a case wherein it is decided by the detection processing that the non-contact charging function is not provided, the control unit performing no correction of the resonance frequency of the RFID antenna, while in a case wherein it is decided by the detection processing that the non-contact charging function is provided, the control processing obtaining, from the storage unit, a correction value of the resonance frequency of the RFID antenna corresponding to the apparatus configuration in which the non-contact charging function is provided, to correct the resonance frequency of the RFID antenna with the correction value obtained,
in a case wherein it is decided by the detection processing that the standard battery is not installed, the detection processing deciding whether or not the large capacity battery is provided as the extension function, and
in a case wherein it is decided by the detection processing that the large capacity battery is provided, the control processing obtaining, from the storage unit, a correction value of the resonance frequency of the RFID antenna corresponding to the apparatus configuration in which the large capacity battery is provided, to correct the resonance frequency of the RFID antenna with the correction value obtained, whereas in a case wherein it is decided by the detection processing that the large capacity battery is not provided, the control processing causing a power supply of the portable terminal apparatus to be turned off.

# FIG. 1

# FIG. 2

FIG. 3

FIG. 4

PORTABLE TERMINAL APPARATUS — 401

402 — CPU

403 — OPERATION UNIT

407 — STORAGE UNIT

404 — CONTROL UNIT
405 — USE MODE INFORMATION PROCESSING MEANS
406 — FREQUENCY CORRECTION MEANS

409 — DETECTION UNIT

408 — RFID UNIT

410 — STANDARD BATTERY

OPTIONS (EXTENSION FUNCTIONS)

411 — LARGE CAPACITY BATTERY

412 — NON-CONTACT CHARGING UNIT

413 — SENSOR

414 — FUNCTION A

415 — FUNCTION B

4xx — FUNCTION XX

# FIG. 5

# FIG. 6

# FIG. 7

| STATUS | APPARATUS CONFIGURATION | FREQUENCY CORRECTION VALUE |
|--------|-------------------------|---------------------------|
| ① | RFID PLUS STANDARD BATTERY | 0kHz |
| ② | RFID PLUS STANDARD BATTERY PLUS NON-CONTACT CHARGING | -50kHz |
| ③ | RFID PLUS LARGE CAPACITY BATTERY | -100kHz |
| ④ | NONE | - |

## FIG. 8

START

↓ S10

POWER SUPPLY STARTED

↓ S11

STANDARD BATTERY? — No → ... → LARGE CAPACITY BATTERY? (S15)

Yes ↓

NON-CONTACT CHARGING? (S12) — Yes → 50 KHZ DOWN (STATUS ②) (S14)

No ↓

CORRECTION VALUE 0 KHZ (STATUS ①) (S13)

LARGE CAPACITY BATTERY? (S15) — Yes → 100 KHZ DOWN (STATUS ③) (S16); No → POWER SUPPLY OFF END (STATUS ④) (S17)

END

EP 2 793 173 A1

**INTERNATIONAL SEARCH REPORT**

| International application No. |
| --- |
| PCT/JP2012/082400 |

A. CLASSIFICATION OF SUBJECT MATTER
*G06K19/07*(2006.01)i, *H04B1/59*(2006.01)i, *H04B5/02*(2006.01)i, *H04M1/00* (2006.01)i

According to International Patent Classification (IPC) or to both national classification and IPC

B. FIELDS SEARCHED

Minimum documentation searched (classification system followed by classification symbols)
G06K19/07, H04B1/59, H04B5/02, H04M1/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2008-022435 A (Sony Ericsson Mobile Communications Japan, Inc.), 31 January 2008 (31.01.2008), abstract; claims 1, 9; fig. 1 to 13 & US 2008/0012712 A1 & EP 1884881 A1 & KR 10-2008-0007181 A | 1-10 |
| A | JP 2009-176027 A (Toshiba Corp.), 06 August 2009 (06.08.2009), abstract; paragraphs [0015], [0021]; fig. 1 to 11 & US 2009/0189742 A1 | 1-10 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 18 January, 2013 (18.01.13) | 29 January, 2013 (29.01.13) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2012/082400 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2011-077976 A  (Hitachi Kokusai Electric Inc.), 14 April 2011 (14.04.2011), abstract; claim 1; fig. 1 to 5 (Family: none) | 1-10 |
| A | JP 2011-078040 A  (Sony Corp.), 14 April 2011 (14.04.2011), abstract; claims 1 to 5; fig. 1 to 16 (Family: none) | 1-10 |
| A | JP 05-083173 A  (Fuji Electric Co., Ltd.), 02 April 1993 (02.04.1993), abstract; paragraph [0009]; fig. 1 to 3 (Family: none) | 1-10 |
| A | JP 2007-060076 A  (Casio Hitachi Mobile Communications Co., Ltd.), 08 March 2007 (08.03.2007), abstract; paragraphs [0015], [0023]; fig. 1 to 4 (Family: none) | 1-10 |
| A | JP 2004-265377 A  (Hagiwara Sys-Com Co., Ltd.), 24 September 2004 (24.09.2004), abstract; paragraph [0079]; fig. 1 to 8 (Family: none) | 1-10 |
| A | JP 09-511886 A  (Siemens AG.), 25 November 1997 (25.11.1997), entire text; all drawings & WO 1996/013792 A1      & US 5953642 A & DE 4438287 C1        & CN 1170467 A & ES 2115401 T3 | 1-10 |
| A | WO 2010/123106 A1  (Kyocera Corp.), 28 October 2010 (28.10.2010), paragraphs [0076] to [0083]; fig. 1 to 16 (Family: none) | 1-10 |

Form PCT/ISA/210 (continuation of second sheet) (July 2009)

**EP 2 793 173 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011273867 A
- JP 2010147743 A